# EUROPEAN PATENT SPECIFICATION

(11) **EP 1 262 354 B1**
(45) Date of publication and mention of the grant of the patent: **08.12.2004**
(21) Application number: 02077010.3
(22) Date of filing: 22.05.2002
(51) Int. Cl.: B60K 15/03

(54) **Cover assembly for fuel tank**
Abdeckung für einen Kraftstofftank
Module de trappe d'obturation de réservoir pour véhicules à moteur

(30) Priority: 25.05.2001 US 293661; 05.11.2001 US 11426
(43) Date of publication of application: 04.12.2002
(73) Proprietor: Delphi Technologies, Inc., Troy, MI 48007 (US)
(72) Inventor: Beyer, Sharon E., Grand Blanc, MI 48439 (US); Jones, Dale R., Flushing, MI 48433 (US); Catlin, Matthew L., Flushing, MI 48433 (US); Kuehnemund, Bruce A., Flushing, MI 48433 (US); Sawert, Ulf, Grand Blanc, MI 48439 (US); Beyer, Jeffrey W., Grand Blanc, MI 48439 (US)
(74) Representative: Denton, Michael John

(56) References cited:
- EP-A- 1 122 114
- DE-A- 19 531 423
- US-A- 5 673 958
- US-B1- 6 182 693
- "WELD-ON RETENTION COVER" RESEARCH DISCLOSURE, KENNETH MASON PUBLICATIONS, HAMPSHIRE, GB, no. 414, October 1998 (1998-10), page 1350 XP000824921 ISSN: 0374-4353

## Description

### TECHNICAL FIELD

The present invention relates generally to fuel tanks for vehicles and, more particularly, to a cover assembly for a fuel tank of a vehicle.

### BACKGROUND OF THE INVENTION

It is known to provide a fuel tank in a vehicle to hold fuel to be used by an engine of the vehicle. In such a fuel tank, a fuel delivery module is provided with a cover to seal the opening through which the fuel delivery module has been assembled into the fuel tank. In some cases, the fuel delivery module consists only of a cover/flange to which either an electrical fuel pump and/or a mechanism for indicating fuel is attached. Recently, the trend has been to construct fuel delivery modules with an integral fuel reservoir. Various valves, sensors, pressure regulators, as well as filters have been added over time. Several of these components have been mounted or attached to the cover. Typically, the cover has fuel tubes, an electrical connector, and a rollover valve attached thereto. To attach these components more readily to the cover, the cover is made entirely out of a plastic material.

However, the plastic material has a relatively high permeability when used with fuels. With more stringent government regulations on the permeation of hydrocarbons being implemented, more components are being placed into the fuel tank to reduce the number of openings through a shell of the fuel tank and to minimize hydraulic connections external to the fuel tank. Because of these more stringent government regulations, metal covers/flanges are being specified to reduce the permeation through the material for the cover. Further, as the need for additional features on the metal cover/flange increases, so does the component part count, the number of assembly operations, as well as the cost.

Therefore, it is desirable to provide a cover assembly for a fuel tank that reduces permeation of fuel through the cover. It is also desirable to attach multiple components to a cover of a cover assembly for a fuel tank. It is further desirable to provide a cover assembly for a fuel tank, which reduces the component part count and number of assembly operations. Therefore, there is a need in the art to provide a cover that meets these desires.

US-A-6 182 693 discloses an assembly in accordance with the preamble of Claim 1.

### SUMMARY OF THE INVENTION

It is, therefore, one object of the present invention to provide a new cover assembly for a fuel tank of a vehicle.

It is another object of the present invention to provide a cover assembly with a separate cover and a carrier to which multiple components are attached to the cover for a fuel tank.

To achieve the foregoing objects, the present invention provides a cover assembly for a fuel tank of a vehicle according to claim 1.

One advantage of the present invention is that a new cover assembly is provided for fuel tank of a vehicle that includes a metal cover with a one-piece plastic carrier. Another advantage of the present invention is that the cover assembly has a metal cover and a plastic carrier used in conjunction with the metal cover to minimize permeation and to enhance cover robustness. Yet another advantage of the present invention is that the cover assembly retains the multiple components to the cover via the carrier. Still another advantage of the present invention is that the cover assembly can also be used to retain the electrical connector and the rollover valve. A further advantage of the present invention is that the cover assembly reduces cost by reducing the component part count and number of assembly operations. Yet a further advantage of the present invention is that the cover assembly improves performance by incorporating a plastic carrier into a metal cover, which will allow multiple components to be attached to the cover.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a cover assembly for a fuel delivery module, according to the present invention, illustrated in operational relationship with a fuel tank.
Figure 2 is a perspective view of the cover assembly and fuel delivery module of Figure 1.
Figure 3 is an exploded perspective view of the cover assembly of Figure 1.
Figure 4 is a top perspective view of a carrier of the cover assembly of Figure 1.
Figure 5 is a bottom perspective view of the carrier of the cover assembly of Figure 4.
Figure 6 is an elevational view of the cover assembly of Figure 1.
Figure 7 is a fragmentary top perspective view of a portion of the cover assembly of Figure 1.
Figure 8 is a bottom perspective view of the portion of the cover assembly of Figure 7.
Figure 9 is a fragmentary elevational view of the cover assembly of Figure 1.

### DESCRIPTION OF THE PREFERRED EMBODIMENT

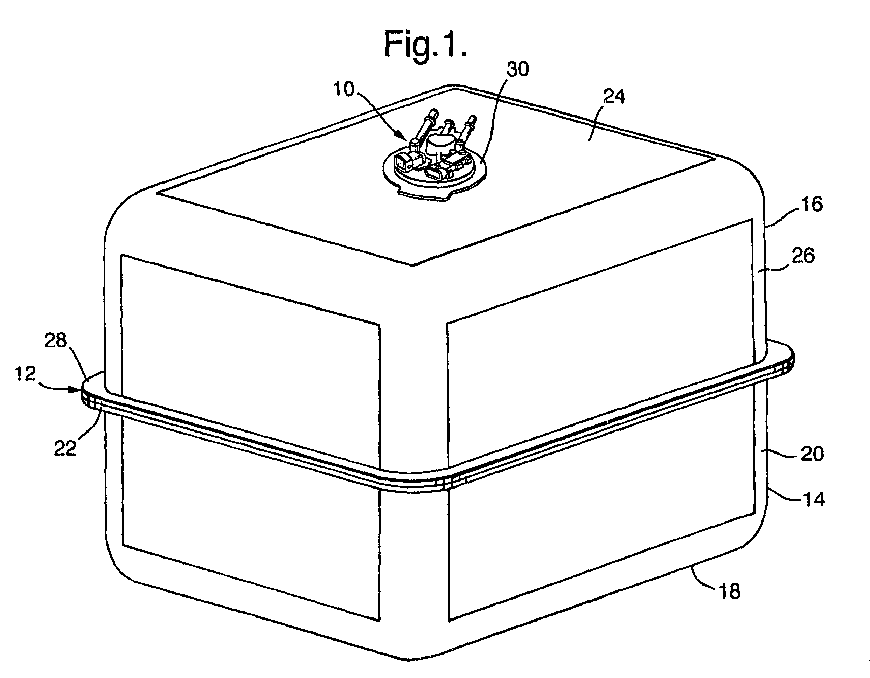

Referring to the drawings and in particular Figures 1 through 3, one embodiment of a cover assembly 10, according to the present invention, is shown for a fuel tank 12 of a vehicle (not shown). The fuel tank 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together by suitable means such as by welding. The lower half shell 14 and upper half shell 16 are made of a rigid material such as plastic. The base wall 24 of the upper half shell 16 includes an opening 30 for the cover assembly 10. It should be appreciated that, except for the cover assembly 10, the fuel tank 12 is conventional and known in the art.

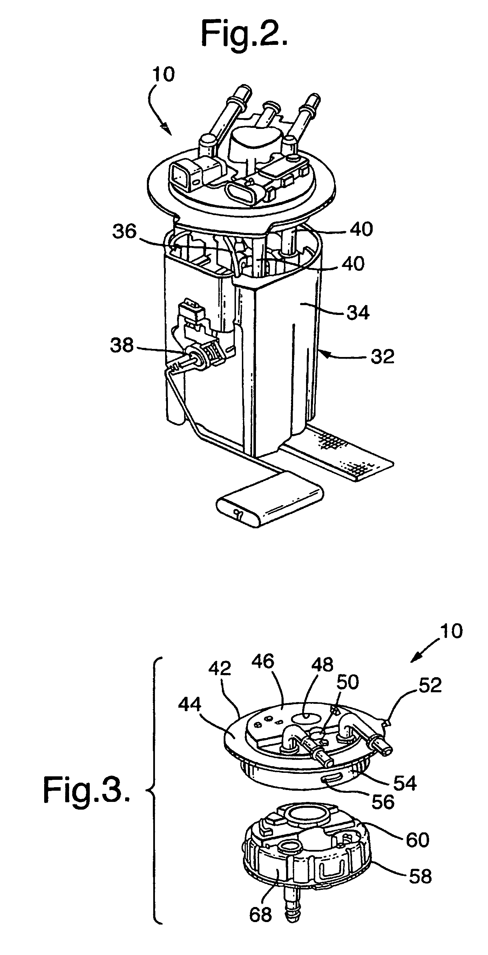

As illustrated in Figure 2, the cover assembly 10 is part of a fuel delivery module, generally indicated at 32. The fuel delivery module 32 is disposed in the fuel tank 12 to deliver fuel from the fuel tank 12 to an engine (not shown) of the vehicle. The fuel delivery module 32 includes a reservoir assembly 34 having an electrical fuel pump 36 mounted therein. The fuel delivery module 32 also includes a fuel level indication mechanism 38 such as a rheostat connected to the reservoir assembly 34 for indicating the level of the fuel inside the fuel tank 12. The fuel delivery module 32 further includes a plurality of guide rods or tubes 40 to mechanically connect the cover assembly 10 with the reservoir assembly 34. It should be appreciated that, in other types of fuel delivery modules, there is no mechanical connection between the cover assembly 10 and the reservoir assembly 34 and this type of module requires a retaining mechanism on the bottom of the fuel tank 12.

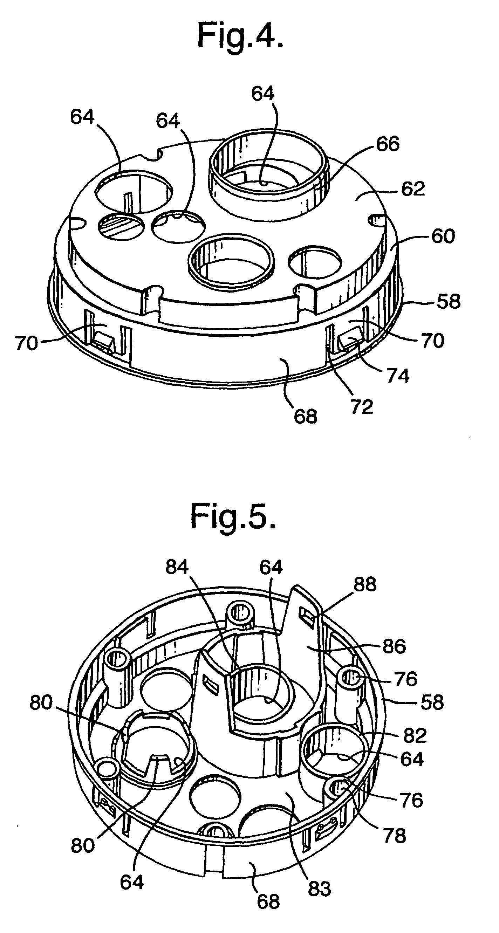

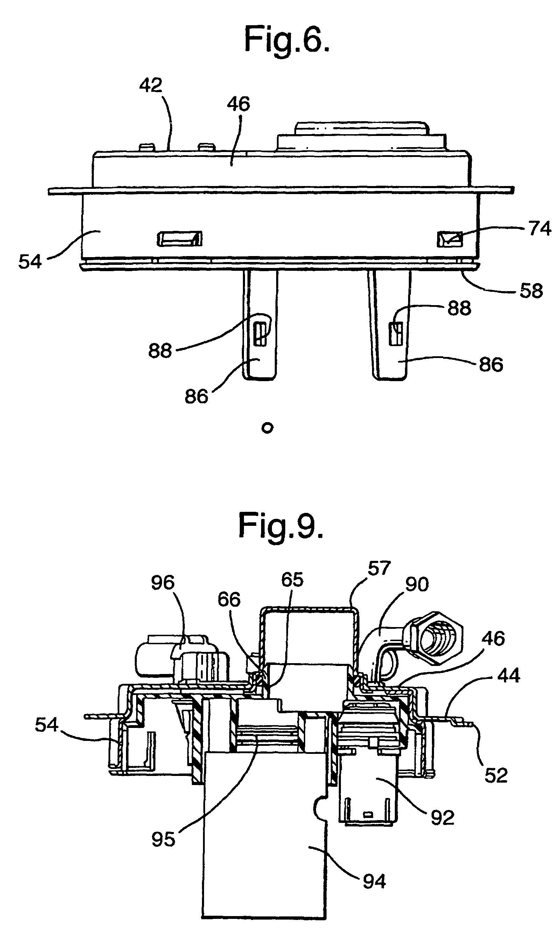

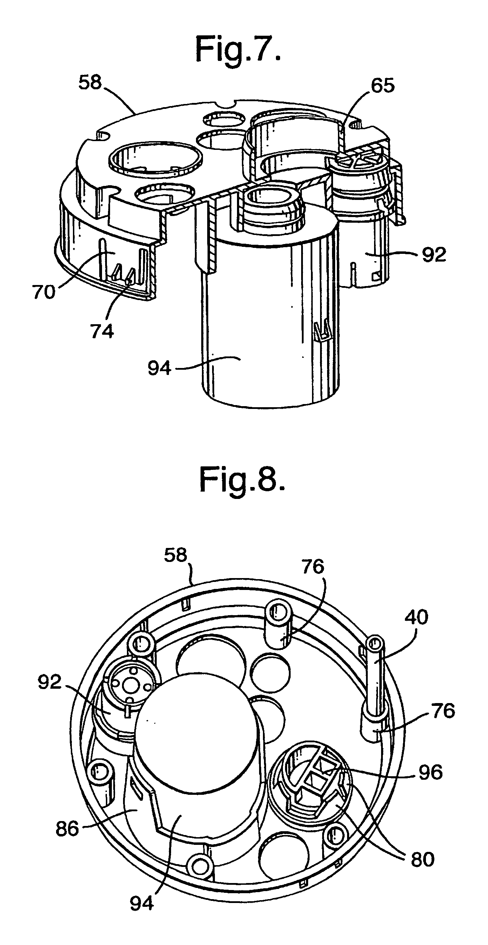

Referring to Figures 3 through 9, the cover assembly 10 includes a cover 42 to cover or close the opening 30. The cover 42 is generally circular in shape. The cover 42 includes a base wall 44 having a raised portion 46. The raised portion 46 has at least one, preferably a plurality of apertures 48,50 extending therethrough for a function to be described. The cover 42 also includes a flange wall 52 extending downwardly and radially outwardly from the base wall 44. The cover 42 further includes a skirt or side wall 54 extending generally perpendicular and axially from the base wall 44. The skirt 54 may include one or more apertures or windows 56 extending therethrough for a function to be described. The cover 42 may include a dome 57 (Figure 9) having a generally circular shape and extending axially from the raised portion 46. The cover 42 is made from a metal material such as steel, which is conventional and known in the art.

The cover assembly 10 also includes an adapter or carrier 58 disposed within and molded to the cover 42. The carrier 58 is generally circular in shape. The carrier 58 has a base wall 60 that is generally planar and circular in shape. The base wall 60 has a raised portion 62 with at least one, preferably a plurality of apertures 64 extending therethrough for a function to be described. The raised portion 62 also has a step 66 that is generally circular in shape and extending axially to provide a support surface for an o-ring 67 used to seal the carrier 58 to the cover 42 at the base of the dome 57. The base wall 60 is disposed adjacent the base wall 44 of the cover 42. The carrier 58 also includes a side wall 68 extending generally perpendicular from the base wall 60. The side wall 68 also includes at least one, preferably a plurality of retaining tabs or snaps 70 for retention of the carrier 58 to the cover 42. The retaining snaps 70 are formed by a generally "U" shaped slot 72 in the side wall 68 and are deflectable. Each of the retaining snaps 70 have a projection 74 extending radially to be disposed in the apertures 56 in the skirt 54 of the cover 42. The side wall 68 is disposed adjacent the skirt 54 of the cover 42. It should be appreciated that the carrier 58 is attached to the cover 42 by latching a plurality of the retaining snaps 70 into an equivalent number of apertures 56 in the skirt 54 of the cover 42.

The carrier 58 includes at least one, preferably a plurality of guide rod retaining bosses 76. The guide rod retaining bosses 76 are generally cylindrical and circular in shape. The guide rod retaining bosses 76 have a cavity 78 extending axially therein to receive and retain the guide rods 40. The guide rod retaining bosses 76 extend axially from the base wall 60 and raised portion 62 and may extend radially from the side wall 68 of the carrier 58. It should be appreciated that the guide rod retaining bosses 76 provide rotational flexibility in the attachment of the cover assembly 10 with the reservoir assembly 34.

The carrier 58 may include at least one, preferably a plurality of retaining tabs 80 disposed about at least one of the apertures 64 and extend axially for a function to be described. The carrier 58 also includes a first cylindrical wall 82 extending axially from an interior surface 83 of the raised portion 62 for a function to be described. The carrier 58 also includes a second cylindrical wall 84 extending axially from the interior surface 83 of the raised portion 62. The carrier 58 further includes at least one, preferably a plurality of retention tabs 86 with each having an aperture or window 88 extending therethrough. The retention tabs 86 are disposed about at least one of the apertures 64 and extend axially for a function to be described. The carrier 58 is made from a plastic material such as a polyethylene. It should be appreciated that the carrier 58 is a monolithic structure being integral, unitary, and one-piece.

The cover assembly 10 may include at least one, preferably a plurality of fuel tubes 90 extending into and through the apertures 50 of the cover 42. The fuel tubes 90 are connected or assembled to the cover 42 by suitable means such as brazing, soldering, welding, or mechanical retention. The cover assembly 10 may include a rollover vent valve 92 extending into the aperture 64 surrounded by the first cylindrical wall 82 of the carrier 58. The first cylindrical wall 82 provides sealing and retention for the rollover vent valve 92. The cover assembly 10 may include a fill limiting vent valve 94 extending into the aperture 64 surrounded by the second cylindrical wall 84 of the carrier 58. The second cylindrical wall 84 provides sealing for an o-ring 95 attached to the fill limiting vent valve 94. The retention tabs 86 provide mechanical retention of the fill limiting vent valve 94 when snaps of the fill limiting vent valve 94 latch into the apertures 88. The cover assembly 10 may include an electrical connector 96 extending into and through the aperture 48 of the cover 42 and the aperture 64 surrounded by the retaining tabs 80 of the carrier 58. The retaining tabs 80 provide retention for the electrical connector 96. It should be appreciated that the valves 92 and 94 operate in series to accurately control the fill of the fuel tank 12. It should also be appreciated that the valves 92 and 94 vent to a charcoal canister (not shown) through a common vent tube (not shown) and communicate with the dome 57 and its associated vent tube through the cavity 65 in the carrier 58 with which both valves 92 and 94 are in communication. It should also be appreciated that the fuel tubes 90, rollover vent valve 92, fill limiting vent valve 94, and electrical connector 96 are conventional and known in the art. It should further be appreciated that the carrier 58 may be extended to other components such as pressure regulators, pressure relief valves, etc.

The carrier 58, when molded from a conductive polymer with a resistance of less than 10¹⁰ ohms can provide dissipation of electrical charges, which may build up in conductive components due to charges resulting from the flow of fuel under some conditions. It should be appreciated that, by tying various components such as guide rods and regulators together, and by being in contact with the metal cover 42, which is normally grounded to the vehicle chassis, the carrier 58 provides an effective and economical mechanism of providing charge dissipation.

In assembling the cover assembly 10, the carrier 58 is snap-fitted to the cover 42. The fuel tubes 90, rollover vent valve 92, fill limiting vent valve 94, and electrical connector 96 are assembled to the carrier 58. The cover 42 cover is placed over the opening 30 and secured to the base wall 24 of the upper half shell 16 by an interlayer (not shown) of plastic material forming a weld therebetween. It should be appreciated that the process of securing the metal cover 42 to the plastic base wall 24 is conventional and known in the art.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A cover assembly (10) for a fuel tank (12) of a vehicle comprising:
a cover (42) adapted to close an opening (30) in the fuel tank (12); and
a carrier (58) disposed within said cover (42) and adapted to allow a plurality of components to be attached thereto; **characterized in that**
the cover (42) is made from metal material; the carrier (58) is made from plastics material; and **in that** the assembly (10) is adapted to fixedly close the opening (30).

2. A cover assembly (10) as set forth in claim 1 wherein said carrier (58) has a base wall (60) and a side wall (68) extending from said base wall (60).

3. A cover assembly (10) as set forth in claim 2 wherein said carrier (58) includes at least one guide rod retaining boss (76) connected to at least one of said base wall (60) and said side wall (68) and having a cavity (78) therein to receive a guide rod (40) of the fuel reservoir (34).

4. A cover assembly (10) as set forth in claim 2 wherein said base wall (60) has a plurality of apertures (64) extending therethrough.

5. A cover assembly (10) as set forth in claim 4 including a fuel limiting vent valve (94) extending into said carrier (58) and communicating with at least one of said apertures (64).

6. A cover assembly (10) as set forth in claim 4 including a rollover vent valve (92) extending into said carrier (58) and communicating with at least one of said apertures (64).

7. A cover assembly (10) as set forth in claim 4 including an electrical connector (96) extending into and communicating with at least one of said apertures (64).

8. A cover assembly (10) as set forth in claim 4 including a fuel tube (90) extending into and communicating with at least one of said apertures (64).

9. A cover assembly (10) as set forth in claim 1 wherein said carrier (58) is snap-fitted to said cover (42). .

## Patentansprüche

1. Deckelanordnung (10) für einen Kraftstofftank (12) eines Fahrzeuges, umfassend:
einen Deckel (42), der derart eingerichtet ist, dass er eine Öffnung (30) in dem Kraftstofftank (12) verschließt; und
eine in dem Deckel (42) angeordnete Halterung (58), die derart eingerichtet ist, dass sie es zulässt, dass eine Vielzahl von Komponenten daran angebracht werden können;
**dadurch gekennzeichnet, dass**
der Deckel (42) aus einem Metallmaterial gefertigt ist; die Halterung (58) aus einem Kunststoffmaterial gefertigt ist; und dadurch, dass die Anordnung (10) derart eingerichtet ist, dass sie die Öffnung (30) fest verschließt.

2. Deckelanordnung (10) nach Anspruch 1, wobei die Halterung (58) eine Basiswand (60) und eine sich von der Basiswand (60) erstreckende Seitenwand (68) aufweist.

3. Deckelanordnung (10) nach Anspruch 2, wobei die Halterung (58) zumindest einen einen Führungsstab haltenden Vorsprung (76) aufweist, der mit zumindest einer von der Basiswand (60) und der Seitenwand (68) verbunden ist und einen Hohlraum (78) darin aufweist, um einen Führungsstab (40) des Kraftstoffreservoirs (34) aufzunehmen.

4. Deckelanordnung (10) nach Anspruch 2, wobei die Basiswand (60) mehrere Öffnungen (64) aufweist, die sich durch sie hindurch erstrecken.

5. Deckelanordnung (10) nach Anspruch 4, mit einem Kraftstoff begrenzenden Entlüftungsventil (94), das sich in die Halterung (58) hinein erstreckt und mit zumindest einer der Öffnungen (64) in Verbindung steht.

6. Deckelanordnung (10) nach Anspruch 4, mit einem Überschlagventil (92), das sich in die Halterung (58) hinein erstreckt und mit zumindest einer der Öffnungen (64) in Verbindung steht.

7. Deckelanordnung (10) nach Anspruch 4, mit einem Steckverbinder (96), der sich in zumindest eine der Öffnungen (64) hinein erstreckt und damit in Verbindung steht.

8. Deckelanordnung (10) nach Anspruch 4, mit einem Kraftstoffrohr (90), das sich in zumindest eine der Öffnungen (64) hinein erstreckt und damit in Verbindung steht.

9. Deckelanordnung (10) nach Anspruch 1, wobei die Halterung (58) mit einem Schnappverschluss an dem Deckel (42) befestigt ist.

## Revendications

1. Module de trappe d'obturation (10) pour un réservoir de carburant (12) d'un véhicule comprenant :
une trappe d'obturation (42) adaptée pour fermer un orifice (30) dans le réservoir de carburant (12) ; et
un support (58) disposé à l'intérieur de ladite trappe d'obturation (42) et adapté pour permettre à une pluralité de composants d'être attachés à celui-ci ;
**caractérisé en ce que**
la trappe d'obturation (42) est faite de matériau métallique ; le support (58) est fait de matériau plastique ; et **en ce que** le module (10) est adapté pour fermer l'orifice (30) de façon fixe.

2. Module de trappe d'obturation (10) selon la revendication 1, dans lequel ledit support (58) a une paroi de base (60) et une paroi latérale (68) s'étendant à partir de ladite paroi de base (60).

3. Module de trappe d'obturation (10) selon la revendication 2, dans lequel ledit support (58) comprend au moins un bossage de retenue de tige de guidage (76) relié à au moins une de ladite paroi de base (60) et ladite paroi latérale (68) et ayant une cavité (78) dans celui-ci pour recevoir une tige de guidage (40) du réservoir de carburant (34).

4. Module de trappe d'obturation (10) selon la revendication 2, dans lequel ladite paroi de base (60) a une pluralité d'ouvertures (64) s'étendant à travers elle.

5. Module de trappe d'obturation (10) selon la revendication 4, comprenant un clapet d'aération limiteur de carburant (94) s'étendant dans ledit support (58) et communiquant avec au moins une desdites ouvertures (64).

6. Module de trappe d'obturation (10) selon la revendication 4, comprenant un clapet d'aération de renversement (92) s'étendant dans ledit support (59) et communiquant avec au moins une desdites ouvertures (64).

7. Module de trappe d'obturation (10) selon la revendication 4, comprenant un connecteur électrique (96) s'étendant dans et communiquant avec au moins une desdites ouvertures (64).

8. Module de trappe d'obturation (10) selon la revendication 4, comprenant un tube de carburant (90) s'étendant dans et communiquant avec au moins une desdites ouvertures (64).

9. Module de trappe d'obturation (10) selon la revendication 1, dans lequel ledit support (58) est fixé par encliquetage sur ladite trappe d'obturation (42).
